# EUROPEAN PATENT SPECIFICATION

(11) **EP 3 142 425 B1**
(45) Date of publication and mention of the grant of the patent: **18.03.2020**
(21) Application number: 16188630.4
(22) Date of filing: 13.09.2016
(51) Int. Cl.: H04N 5/63, H04N 5/44, H04N 21/45, H04N 21/443, H04N 21/4363, G06F 9/4401, H04N 21/436, H04W 52/02

(54) **DISPLAY APPARATUS AND METHOD FOR CONTROLLING THE SAME**
ANZEIGEVORRICHTUNG UND VERFAHREN ZU IHRER STEUERUNG
APPAREIL D'AFFICHAGE ET PROCÉDÉ DE COMMANDE CORRESPONDANT

(30) Priority: 14.09.2015 KR 20150129739
(43) Date of publication of application: 15.03.2017
(73) Proprietor: Samsung Electronics Co., Ltd., Suwon-si, Gyeonggi-do 16677 (KR)
(72) Inventor: CHO, Kyung Ik, Gyeonggi-do (KR); KIM, Dong Wook, Gyeonggi-do (KR); YUN, Hyun Kyu, Seoul (KR); HUR, Jae Myung, Gyeonggi-do (KR)
(74) Representative: Walaski, Jan Filip

(56) References cited:
- EP-A1- 2 341 738
- EP-A2- 2 114 103
- US-A1- 2012 213 134
- US-A1- 2012 324 516
- US-A1- 2014 078 950
- Texas Instrument: "WL18xxMOD WiLink(TM) 8 Single-Band Combo Module - Wi-Fi , Bluetooth , and Bluetooth Low Energy (LE)", , 1 July 2013 (2013-07-01), XP055340597, Retrieved from the Internet: URL:http://www.ti.com/lit/ds/symlink/wl183 1mod.pdf [retrieved on 2017-01-31]
- St Microelectronics St Microelectronics: "SPWF01SA/SPWF01SC Datasheet", , 11 June 2013 (2013-06-11), pages 1-16, XP055308436, Retrieved from the Internet: URL:https://ptelectronics.ru/wp-content/up loads/wi-fi_modules_spwf01sa_spwf01sc_stmi croelectronics.pdf [retrieved on 2016-10-06]

## Description

The present invention relates to a display apparatus and a method for controlling the same so as to reduce power consumption.

Recently, electronic appliances having an Internet of Things (IoT) function have been widely adopted. With IoT, information may be exchanged and processed between multiple devices connected to the Internet without human intervention. IoT enables a network in an environment where three distributed environmental elements-a person, a thing, and a service-cooperatively establish intelligent relationships, such as sensing, networking, and information processing, without an explicit intervention of the person.

In order to implement such IoT electronic appliances, the need for an efficient method of managing power consumption is paramount, because these devices are connected to the network at all times and always consume power.

Therefore, it is an aspect of the present disclosure to provide a display apparatus and a method for controlling the same, which sequentially apply a power source to a network processor of the display apparatus according to flow of data processes so as to maintain a low power state.

US2012/324516 discloses waking up a TV using a Wi-Fi magic packet (Wake On Wireless LAN) and US2012/0213134 discloses remote wakeup of an application processor of a mobile device.

According to aspects of the invention, there is provided a display apparatus according to claim 1 and a method for controlling the display apparatus according to claim 6.

In accordance with one aspect of the present disclosure, a display apparatus may include a communication module configured to receive data from an external electronic device while the communication module is in a sleep mode; a Central Processing Unit (CPU) sub-system including a CPU configured to receive the data from the communication module and process the received data; and a controller configured to sequentially switch the communication module and the CPU from the sleep mode to an operation mode.

If the communication module transmits an interrupt signal, the controller controls the communication module to switch from the sleep mode to the operation mode. Upon the communication module being switched from the sleep mode to the operation mode, the controller may control the CPU to switch from the sleep mode to the operation mode.

After the CPU processes the received data, the CPU may transmit the processed data to the communication module. The communication module may receive the processed data from the CPU, and transmit the processed data to the external electronic device.

The CPU may control the communication module to transmit the processed data, and control the communication module to switch from the operation mode to the sleep mode.

If the communication module is switched to the sleep mode, the CPU may be switched from the operation mode to the sleep mode.

The communication module may include a Bluetooth module, a Wi-Fi module, a ZigBee module, and/or a Z-wave module.

The central processing unit (CPU) sub-system may include a flash memory and/or a double data rate (DDR) memory.

The display apparatus may further include a universal serial bus (USB) hub configured to connect the communication module to the CPU.

The controller may sequentially switch the communication module, the USB hub, and the processor from the sleep mode to the operation mode.

In accordance with another aspect of the present disclosure, a method for controlling a display apparatus may include receiving, by a communication module, data from an external electronic device while the communication module is in a sleep mode; in response to the received data containing valid data, transmitting an interrupt signal from the communication module to a controller; in response to the controller receiving the interrupt signal, sequentially switching the communication module and a processor from the sleep mode to an operation mode; and processing, by the CPU, the received data transmitted from the communication module to the CPU.

The method may further include transmitting, by the processor, the processed data to the communication module.

The method may further include transmitting, by the communication module, the processed data to a second external electronic device; and switching, by the processor, the communication module from the operation mode to the sleep mode.

The display apparatus may include a universal serial hub (USB) hub configured to connect the communication module to the processor. The controller may switch the USB hub from the sleep mode to the operation mode after the communication module is switched from the sleep mode to the operation mode and before the CPU is switched from the sleep mode to the operation mode.

If the CPU is switched from the sleep mode to the operation mode, the method may further include transmitting, by the communication module, the received data to the processor through the USB hub.

The method may further include transmitting, by the CPU, the processed data to the communication module through the USB hub.

The method may further include transmitting, by the communication module, the processed data to the external electronic device; and switching, by the CPU, the USB hub and the communication module from the operation mode to the sleep mode.

After switching the USB hub and the communication module from the operation mode to the sleep mode by the CPU, the method may further include switching the CPU from the operation mode to the sleep mode.

In accordance with yet another aspect of the present disclosure, a non-transitory computer-readable storage medium storing instructions which, when executed by a CPU, may cause the CPU to perform operations including: receiving, by a communication module, data from an external electronic device while the communication module is in a sleep mode; in response to the received data containing valid data, transmitting an interrupt signal from the communication module to a controller; in response to the controller receiving the interrupt signal, sequentially switching the communication module and a CPU from the sleep mode to an operation mode; and processing, by the CPU, the received data transmitted from the communication module to the CPU.

The above and/or other aspects will become apparent and more readily appreciated from the following description of the embodiments, taken in conjunction with the accompanying drawings, in which:
FIG. 1 is a perspective view illustrating an exterior of an exemplary display apparatus;
FIG. 2 is a control block diagram illustrating an exemplary display apparatus;
FIG. 3 is a conceptual diagram illustrating an exemplary display apparatus and exemplary external electronic devices;
FIGS. 4 and 5 are block diagrams illustrating constituent elements of an exemplary display apparatus;
FIGS. 6 to 12 are flowcharts illustrating methods for controlling an exemplary display apparatus; and
FIG. 13 is a conceptual diagram illustrating an exemplary application of the display apparatus.

Reference will now be made in detail to the embodiments of the present disclosure, examples of which are illustrated in the accompanying drawings, wherein like reference numerals refer to like elements throughout.

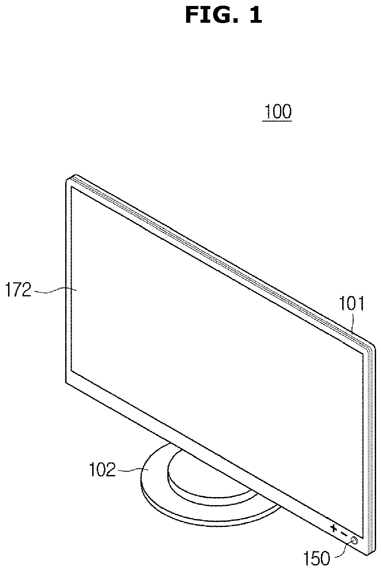

FIG. 1 is a perspective view illustrating an exterior of an exemplary display apparatus.

The display apparatus 100 may process an image signal received from an external source, and may visually display the processed image signal thereon. Although the display apparatus 100 is assumed to be a television (TV) by way of example, the implementation of the display apparatus 100 according to the present invention is not limited thereto. For example, the display apparatus 100 may be implemented in various ways, for example, as a monitor, a portable multimedia device, a mobile communication device, a wearable computing device, etc., and may also be applied to all kinds of image display devices configured to visually display various images.

The display apparatus 100 may include a main body 101 which forms the exterior appearance of the display apparatus 100 and houses various constituent elements of the display apparatus 100.

A stand 102 for supporting the main body 101 may be provided at a lower portion of the main body 101. By the stand 102, the main body 101 may be stably arranged on a surface. However, the scope of the present disclosure is not limited thereto, and the main body 101 may be installed on a vertical surface such as a wall via a bracket or the like, or suspended from a ceiling via a ceiling mount.

An input module 150 for receiving a user control command from a user, and a display panel 172 for displaying images according to the user control command may be disposed at the front surface of the main body 101.

Various constituent elements to implement functions of the display apparatus 100 may be arranged in the main body 101.

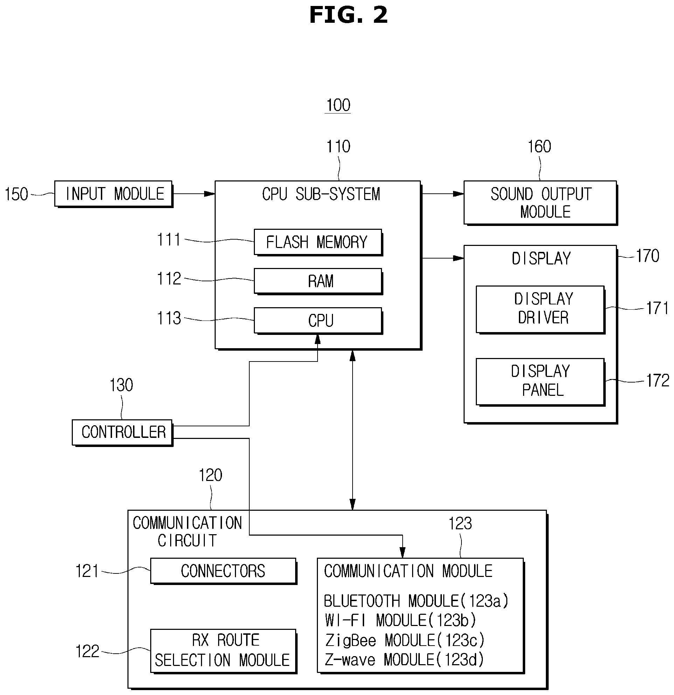

FIG. 2 is a control block diagram illustrating an exemplary display apparatus 100.

In particular, the display apparatus 100 may include the input module 150 for receiving the user control command from the user; a communication circuit 120 for receiving and transmitting images, acoustic data, and network data from and to the external device; a display 170 for displaying an image corresponding to image data; a sound output module 160 for outputting sound corresponding to the acoustic data; and a central processing unit (CPU) sub-system 110 for controlling the display apparatus 100.

The input module 150 may include a plurality of buttons to receive various user control commands from the user. For example, the plurality of buttons may include a volume button to adjust volume of sound applied to the sound output module 160, a channel button to change a communication channel (e.g., broadcast channel) needed for data reception through the communication circuit 120, and a power button to turn the display apparatus 100 on or off.

In addition, the plurality of buttons may include a push switch and a membrane switch to sense pressure applied by the user, or a touch switch to sense contact with some parts of a body of the user. However, the scope of the present disclosure is not limited thereto, and the plurality of buttons may include various input modules capable of outputting an electrical signal in response to a specific operation of the user.

The input module 150 may receive the user control command from the user at a remote site, and may include a remote controller to transmit the received user control command to the display apparatus 100. Further, the input module 150 may allow a user input via a touch, a voice, a gesture, etc.

The communication circuit 120 may receive various kinds of data from various external devices. For example, the communication circuit 120 may receive data from any of an antenna configured to wirelessly receive a broadcast signal, a set-top box configured to receive a broadcast signal by wire or wirelessly so as to convert the received broadcast signal, and a multimedia playback device (e.g., a digital versatile disc (DVD) player, a compact disc (CD) player, a Blu-ray player, etc.) to reproduce data stored in a multimedia storage medium.

In more detail, the communication circuit 120 may include a plurality of connectors 121 connected to an external device, and a reception (Rx) route selection module 122 to select a content reception route from among the plurality of connectors 121.

The connectors 121 may include a Radio Frequency (RF) coaxial cable connector configured to receive a broadcast signal including content from the antenna, and a High-Definition Multimedia Interface (HDMI), a component video connector, a composite video connector, a D-sub connector, etc. configured to receive content from the set-top box or the multimedia playback device.

The reception (Rx) route selection module 122 may select a data reception connector from among the above-mentioned connectors 121. For example, the reception (Rx) route selection module 122 may automatically select one connector 121 having received data, and may manually select the connector 121 to be used for data reception according to the user control command received from the user.

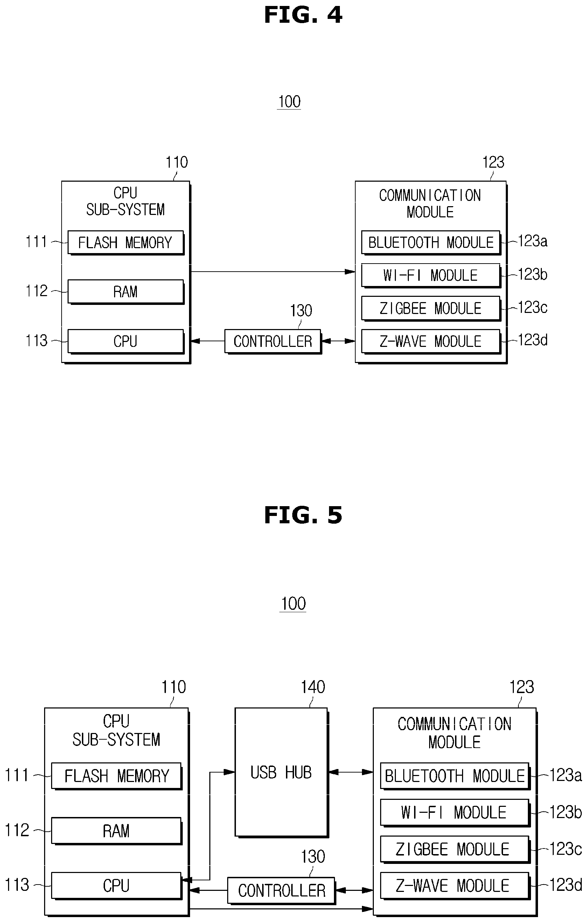

The communication circuit 120 may include a tuner to select a broadcast channel. In addition, the communication circuit 120 may include other modules, without being limited thereto. The communication module 123 of the communication circuit 120 according to one embodiment will hereinafter be described with reference to FIGS. 4 and 5.

The display 170 may include a display panel 172 to visually display images, and a display driver 171 to drive the display panel 172.

The display panel 172 may display images according to image data received from the display driver 171.

The display panel 172 may include pixels, each of which is used as an image display unit. Each pixel may receive an electrical signal indicating image data, and may output an optical signal corresponding to the received electrical signal.

As described above, the optical signals generated from the plurality of pixels contained in the display panel 172 are combined into one image such that the image is displayed on the display panel 172.

In addition, the display panel 172 may be one of various kinds of display panels according to the optical signal display methods of respective pixels.

For example, the display panel 172 may be a light emitting display for allowing each pixel to emit light, a transmission-type display for blocking or transmitting light emitted from a backlight unit or the like, or a reflective-type display for reflecting or absorbing light incident from an external light source.

The display panel 172 may be implemented as a cathode ray tube (CRT) display, a liquid crystal display (LCD) panel, a light emitting diode (LED) display panel, an organic light emitting diode (OLED) display panel, a plasma display panel (PDP), a field emission display (FED) panel, or the like, without being limited thereto. The display panel 172 may include various display means configured to visually display images corresponding to image data.

The display driver 171 may receive image data according to a control signal of the CPU sub-system 110, and may drive the display panel 172 such that images corresponding to the received image data are displayed on the display panel 172.

In particular, the display driver 171 may output an electrical signal corresponding to image data to the pixels that constitute the display panel 172.

The display driver 171 may output the electrical signal to each pixel in various ways in a manner that the electrical signal is applied to all pixels constituting the display panel 172 within a short period of time.

For example, according to the interlaced scanning scheme, the display driver 171 may alternately transmit the electrical signal not only to pixels contained in an odd-numbered horizontal row, but also to pixels contained in an even-numbered horizontal row from among the plurality of pixels. In addition, according to the progressive (non-interlaced) scanning scheme, the display driver 171 may sequentially transmit the electrical signal to the plurality of pixels row by row.

If the display driver 171 outputs the electrical signal corresponding to image data to each pixel constituting the display panel 172 as described above, each pixel may output an optical signal corresponding to the received electrical signal, and the optical signals generated from the respective pixels are combined such that one composite image may be displayed on the display panel 172.

The sound output module 160 may output sound corresponding to acoustic data from among the data received by the control signal of the CPU sub-system 110. The sound output module 160 may be implemented as one or more speakers configured to convert the electrical signal into the sound signal.

The CPU sub-system 110 and the controller 130 will hereinafter be described with reference to FIGS. 4 and 5.

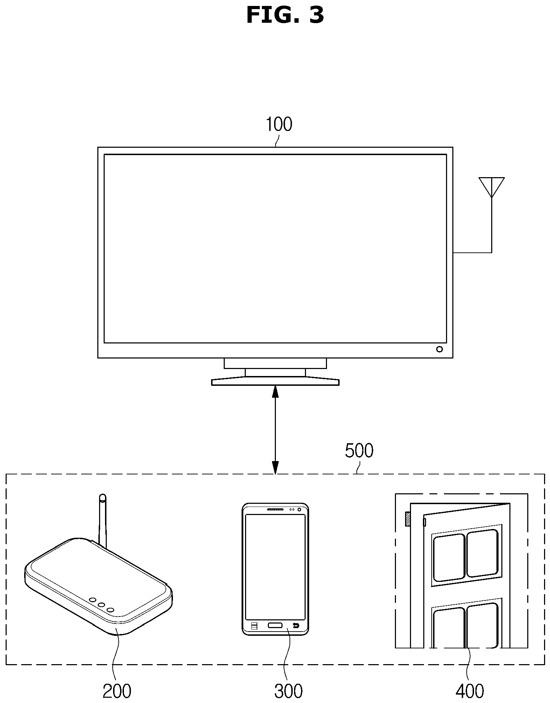

FIG. 3 is a conceptual diagram illustrating an exemplary display apparatus and exemplary external electronic devices.

As shown in FIG. 3, the display apparatus 100 may process image signals received from an external source, and may visually display the processed images.

The external electronic devices 500 may include a router 200, a smartphone 300, and a sensor 400, and may further include at least one of a TV, a desktop monitor, a tablet computer, a personal computer (PC), a set-top box (STB), and a set-back box (SBB). The scope of the external electronic devices 500 is not limited thereto, and the external electronic devices 500 may also be implemented as any devices capable of communicating with the display apparatus 100 over the network.

The display apparatus 100 may be connected to the external electronic device 500 over a wired or wireless communication network.

As one example of connection between the display apparatus 100 and the external electronic device 500, the router 200 may be connected to a cloud server over the Internet.

The display apparatus 100 may receive a signal from the router 200. Conversely, the router 200 may also receive data from the display apparatus 100. In addition, the router 200 may transmit data to the cloud server configured to store data over the Internet.

The display apparatus 100 may be connected to the smartphone 300.

For example, the display apparatus 100 may be connected to the smartphone 300 through near-field communication (NFC), Wi-Fi, or Bluetooth.

In addition, the display apparatus 100 may receive personal information stored in a mobile device's Universal Subscriber Identity Module (USIM) through the communication module 123, and may thus update personal information of a display device USIM. Conversely, the display apparatus 100 may transmit personal information of the display device USIM to the smartphone 300 through the communication module 123, and may thus update personal information of the mobile device USIM.

Thus, when the user purchases a new display apparatus 100 to replace a current display apparatus, the user may only need to transfer the USIM of the current display apparatus to the new display apparatus 100, which may then allow the user to use and update the legacy user environment of the current display apparatus. In addition, the user may perform security authentication using subscriber identification (ID) information stored in the USIM without the need to register a new authentication certificate for subscriber authentication.

In the above-mentioned example, the smartphone 300 and the display apparatus 100 may implement thing-to-thing communication without intervention of the user.

The display apparatus 100 may be connected to various sensors 400.

The sensors 400 may include a door sensor, a humidity sensor, a temperature sensor, a vibration sensor, a gas leak detector, a smart plug, or the like. In addition, the sensors 400 may include a radio frequency (RF) module or a router capable of performing the Internet of things (IoT) functions. The sensors 400 may be implemented as any electronic device that is capable of measuring an environmental value and transmitting the value to the display apparatus 100.

FIG. 4 is a block diagram illustrating constituent elements of the display apparatus.

As shown in FIG. 4, the display apparatus 100 may include a CPU sub-system 110 configured to control the display apparatus 100, a communication module 123 configured to transmit/receive data to/from the external electronic device, and a controller 130 configured to control the CPU sub-system 110 and the communication module 123. The display apparatus 100 may include other elements, components, modules, and subsystems.

The communication module 123 for communicating with the external electronic device 500 may include a Bluetooth module 123a for performing short-range communication to exchange data with a network device; a Wi-Fi module 123b for transmitting/receiving data over a wireless local area network (WLAN); and a ZigBee module 123c and a Z-wave module 123d to perform low-power short-range communication within the range of 10-20 m through wireless networking at home or offices.

The communication module 123 is merely an example applicable to the embodiments of the display apparatus 100, and the scope of the present disclosure is not limited thereto. That is, the communication module 123 may include only some parts of the above modules, or may further include other modules other than the above modules, such as a near-field communication (NFC) module.

Each module of the communication module 123 may include firmware to control the communication module 123, an input module to receive a control signal from the controller, and other elements.

The CPU sub-system 110 may include a flash memory 111, a random access memory (RAM) 112, and a CPU 113. In the embodiment, the CPU sub-system 110 may refer to a processor corresponding to a generic name of the control constituent elements of the display apparatus 100, the scope of the present disclosure is not limited thereto, and the CPU sub-system 110 may be implemented as any module for grouping the control constituent elements of the display apparatus 100.

The flash memory 111 is a storage memory in which stored information remains unchanged even when power supply is not applied to the flash memory 111. The flash memory 111 may be an example of the storage memory acting as the CPU sub-system, and may further include other non-volatile memories, for example, read-only memory (ROM), erasable programmable read-only memory (EPROM), electrically erasable programmable read-only memory (EEPROM), etc.

The RAM 112 may be, for example, a double data rate (DDR) memory, which is a kind of RAM used as a cache memory, and has a higher data processing speed than static random access memory (SRAM) or dynamic random access memory (DRAM). The DDR memory is an example of a data processing memory configured to perform functions of the CPU sub-system 110. However, the scope of the present disclosure is not limited thereto, and may include other volatile memories as necessary.

The CPU 113 may control the operations of the display apparatus 100. For example, the CPU 113 may execute a code copied in the flash memory 111 such that the CPU 113 performs a command corresponding to the code. The CPU 113 may include a single processor core (single core), or may include a plurality of processor cores (multicore). For example, the CPU 113 may be dual-core, quad-core, hexa-core, etc. In accordance with one embodiment, the CPU 113 may further include a cache memory located inside or outside the CPU 113. The CPU 113 may be contained in the CPU sub-system 110 as illustrated in FIGS. 2 and 4.

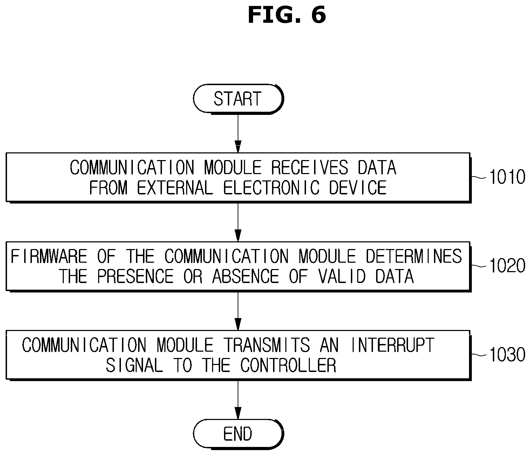

In the embodiment, the CPU 113 of the display apparatus 100 may process data received from the communication module 123. In addition, the CPU 113 may control the communication module 123 to switch from an operation mode to a sleep mode. In the embodiment, the CPU 113 will hereinafter be described in FIGS. 6 to 12.

Meanwhile, the above-mentioned constituent elements of the CPU sub-system 110 are not limited thereto, and the CPU sub-system 110 may further include other constituent elements related to memory, control, and calculation functions.

The controller 130 may sequentially switch the communication module 123 and the CPU 113 from the sleep mode to the operation mode. The controller 130 may be located outside of the CPU sub-system 110 and the communication module 123. However, the location of the controller 130 is not limited thereto, and the controller 130 and the CPU 113 may be implemented as a single chip within the CPU sub-system 110. The operations of the controller 130 will hereinafter be described. The sleep mode is also known as a low power mode or power saving mode, and the display apparatus 100 under the sleep mode may only have limited functionality while part of its functions (e.g., communication, display panel) are temporarily disabled in order to conserve power consumption. Thus, power may be selectively supplied to only a portion of the elements or components (e.g., communication module, etc.) while the display apparatus 100 is in the sleep mode. On the contrary, full power may be supplied to all or most of the elements and components of the display apparatus 100 while the display apparatus 100 is in the operation mode.

FIG. 5 is a block diagram further illustrating constituent elements of the display apparatus.

As shown in FIG. 5, the display apparatus 100 may further include a Universal Serial Bus (USB) hub 140. In FIG. 5, description of the same constituent elements as in FIG. 4 will herein be omitted.

The USB hub 140 may connect the communication module 123 to the CPU 113. The communication module 123 may include a Bluetooth module 123a, a Wi-Fi module 123b, a ZigBee module 123c, and a Z-wave module 123d. Therefore, the USB hub 140 may connect various modules of the communication module 123 to the CPU 113.

The scope of the present disclosure does not necessarily limit the term USB hub 140 to USB-related devices, but the USB hub 140 may be any module capable of facilitating interconnection between the communication module 123 and the CPU 113.

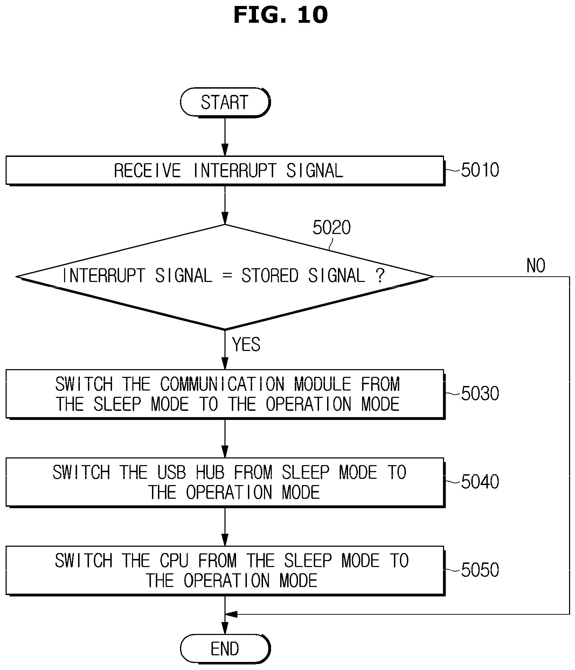

As can be seen from FIG. 5, the USB hub 140 may be implemented as a separate structure disposed between the CPU sub-system 110 and the communication module 123. Alternatively, as can be seen from FIG. 4, the CPU 113 may include the function of the USB hub 140, such that the CPU 113 and the USB hub 140 may be implemented as a single chip. The operations of the USB hub 140 will hereinafter be described with reference to FIGS. 10 to 12.

FIGS. 6 to 12 are flowcharts illustrating methods for controlling an exemplary display apparatus. The steps and operations outlined in reference to FIGS. 6 to 12 are exemplary and can be implemented in any combination thereof, including combinations that exclude, add, or modify certain steps.

FIG. 6 is a flowchart illustrating the operations of an exemplary display apparatus.

Specifically, FIG. 6 is a flowchart illustrating the operations of the communication module 123 during the sleep mode.

In this case, the situation in which the communication module 123 is in the sleep mode may indicate that a power-supply voltage is supplied only to the firmware of the communication module 123 and some parts of the input or communication unit in a limited manner. The above-mentioned situation may indicate that only reception of an external event signal may be permitted and data transmission to the external part may be limited or impossible.

In addition, when an occurrence of a valid event is detected, the communication module 123 in sleep mode may transmit an interrupt signal to the controller 130 according to a determination by firmware contained in the communication module 123, and a power-supply voltage may be applied to the remaining elements of the display apparatus 100 (e.g., a transmitter) according to the determination and control of the controller 130, such that the communication module 123 may switch from the sleep mode to the operation mode.

Referring back to FIG. 6, an event may occur in the environment in which the IoT function is applied. There may be various kinds of events. Each event may be predefined and shared with the display apparatus 100 in advance, and the scope of the embodiment is not limited thereto.

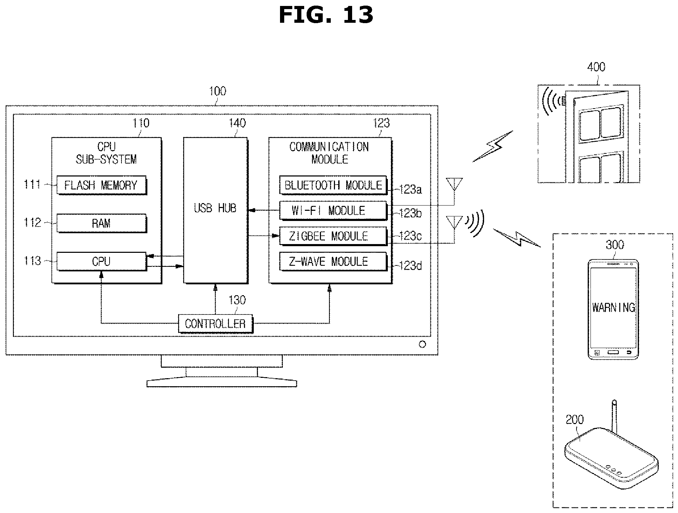

If an event occurs, the external electronic device 500 having detected the event may transmit detected data to the display apparatus 100. The embodiment related to the event will hereinafter be described with reference to FIG. 13.

The communication module 123 may receive data from the external electronic device 500 in operation 1010.

The firmware of the communication module 123 may determine the presence or absence of valid data in operation 1020. In particular, the communication module 123 may determine whether the received data is valid data to be used for execution of the operations of the present disclosure.

In order to determine the presence or absence of a valid event using the communication module 123, the firmware may be used. The firmware is a type of software that causes a microprocessor to determine and process input data. In addition, as described above, the firmware may be located in each module contained in the communication module 123. In other words, each of the Bluetooth module 123, the Wi-Fi module 123b, the ZigBee module 123c, and the Z-wave module 123d may include at least one firmware package.

The firmware may determine the presence or absence of valid data. Here, valid data may indicate a specific and/or predefined signal received from an external user electronic device 500 from among various signals or data received by the communication module 123. For example, the valid data may be a predefined data value, string, or signature.

In particular, the firmware may operate in conjunction with a processor configured to perform simple calculation or operation. In addition, the firmware may compare a received signal with a pre-stored signal so as to determine whether the received signal is identical to the pre-stored signal, and may determine the presence or absence of valid data.

For example, the Wi-Fi module 123c may transmit and receive RF signals to and from the router 200. In this case, a security passcode may be established for each of the router and the Wi-Fi module 123c such that the router and the Wi-Fi module 123c can be protected from unauthorized access. That is, after determining that the security passcode of the Wi-Fi module 123c is identical to that of the router 200, the Wi-Fi module 123c may be permitted to connect to the router 200.

For example, the Wi-Fi module 123c may receive RF signals not only from the router 200 having the same security passcode but also from other routers. Therefore, some signals having different security passcodes from among all the signals received by the Wi-Fi module 123c may be invalid signals that do not allow connection with the Internet server. That is, the firmware of the Wi-Fi module 123c may determine that only an output signal of the router 200 that is used for signal transmission and has the same security passcode, is valid data.

Meanwhile, the above-mentioned method for determining the presence or absence of valid data is merely an example of the decision process based on the firmware of the communication module 123. There may be various kinds of data, and the scope of such data is not limited thereto.

Once the communication module receives the data, the communication module may transmit an interrupt signal to the controller in operation 1030.

Generally, in computer programming, the term "interrupt" may indicate that, when the processor recognizes a predefined situation, a current task is suspended and a task corresponding to the predefined situation is given priority. In the embodiment, the interrupt signal transmitted from the communication module 123 may indicate a control command for commanding the controller 130 to start an operation.

For example, the interrupt signal transmitted from the communication module 123 may be a General Purpose Input/Output (GPIO) signal. The GPIO is an I/O interface used in most microprocessors, and the GPIO signal may be transmitted to I/O pins so as to control the microprocessor. However, the scope of the term "interrupt" is not limited thereto, and any signal capable of commanding the controller 130 to operate may be used as the interrupt signal.

If the communication module 123 receives data from the external electronic device 500 in the sleep mode, the communication module 123 may examine the data, identify the valid data, and transmit the interrupt signal to the controller.

A method for controlling the display apparatus according to one embodiment will hereinafter be given. The above-mentioned display apparatus 100 may be applied to the control method of the display apparatus. Accordingly, the above-mentioned drawings and explanation may be equally applied to the control method of the display apparatus.

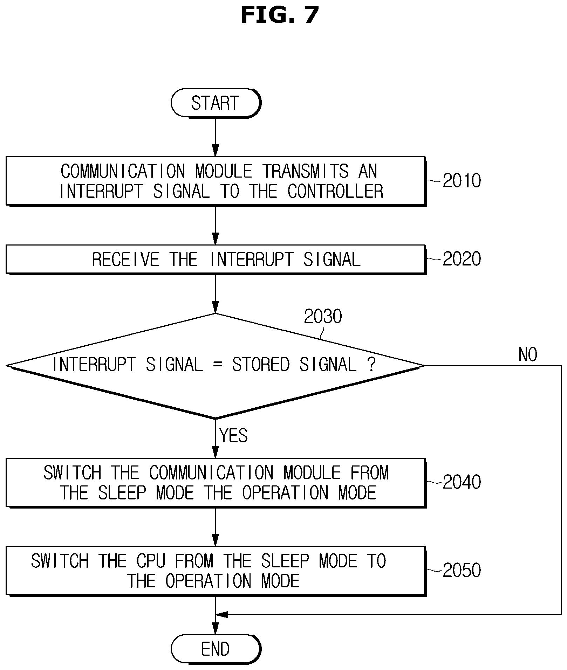

FIG. 7 is a flowchart illustrating a method for controlling an exemplary display apparatus according.

Particularly, the controller having received the interrupt signal from the communication module 123 may sequentially switch on the communication module 123 and the CPU 113.

The communication module 123 may transmit the interrupt signal to the controller 130 in operation 2010.

The controller 130 may receive the interrupt signal from the communication module 123 in operation 2020. As described above, the controller 130 may consist of a simple circuit, maintain a low power state, and always be in a power-supply ON state as long as power is supplied. Therefore, the controller 130 may receive an output signal of the communication module 123.

The controller 130 may identify the interrupt signal received from the communication module 123 in operation 2030.

That is, the controller 130 may determine whether the interrupt signal is identical to the signal stored in the controller 130. If the output signal of the communication module 123 is different from the stored signal, the controller 130 may not switch the communication module 123, the CPU 113, etc. from the sleep mode to the operation mode, and may stop the communication module 123, the CPU 113, etc.

However, if the interrupt signal is identical to the stored signal, the controller 130 may switch the communication module 123 of the display apparatus 100 from the sleep mode to the operation mode in operation 2040.

Here, the operation mode may indicate that power is applied to constituent elements of the display apparatus 100 such that data can be processed or a control command can be carried out.

For example, the operation mode of the communication module 123 may indicate a data reception available state or a data transmission available state. The operation mode of the CPU 113 may indicate that data received by the CPU 113 can be processed, the CPU 113 can control constituent elements of another display apparatus 100, and constituent elements of another display apparatus 100 can be switched from the operation mode to the sleep mode.

After switching the communication module 123 from the sleep mode to the operation mode, the controller 130 may switch the CPU 113 from the sleep mode to the operation mode in operation 2050. The controller 130 may eventually switch the CPU 113 to the operation mode back to the sleep mode once necessarily operations are performed.

In the meantime, the controller 130 may switch the communication module 123 and the CPU 113 from the sleep mode to the operation mode. However, other constituent elements contained in the display apparatus 100 may also be switched from the sleep mode to the operation mode according to a program stored in the controller 130.

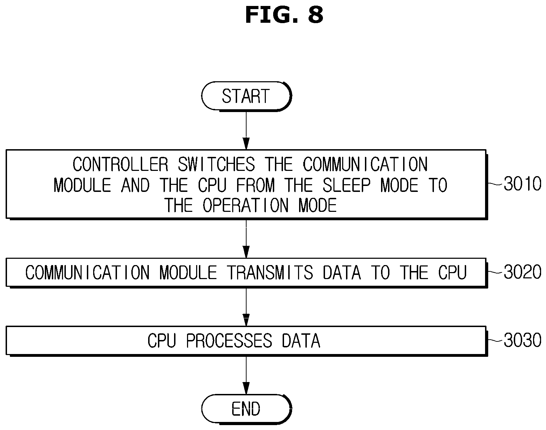

FIG. 8 is a flowchart illustrating a method for controlling an exemplary display apparatus.

In particular, the communication module 123 and the CPU 113 may be switched to the operation mode to process data received from the external electronic device 500.

The controller 130 may switch the communication module 123 and the CPU 113 from the sleep mode to the operation mode in operation 3010.

As described above, when the communication module 123 is in the operation mode instead of the sleep mode, the communication module 123 may transmit data to other structures. That is, power may be applied to constituent elements of the communication module 123 configured to perform a transmission (Tx) function.

The communication module 123 may transmit reception (Rx) data to the CPU 113 in operation 3020.

The CPU 113 switched to the operation mode may receive data from the communication module 123, and may process data received from the communication module 123 in operation 3030. A method for processing data using the CPU 113 may be varied according to the reception (Tx) data.

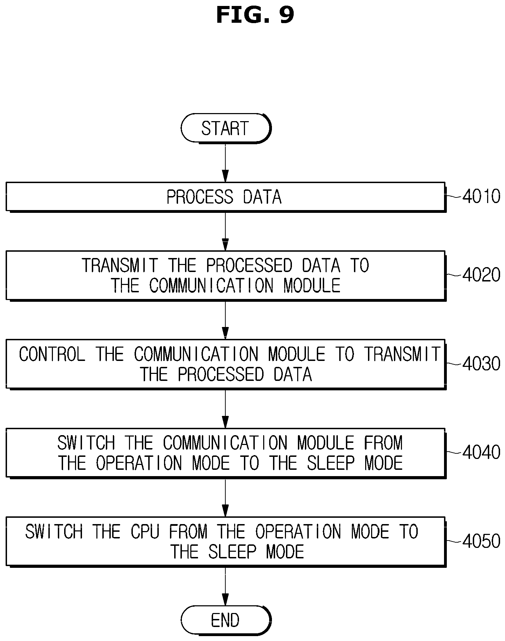

FIG. 9 is a flowchart illustrating a method for controlling an exemplary display apparatus.

Particularly, the CPU 113 switched to the operation mode may process reception (Rx) data and communicate with the external electronic device 500 through the communication module 130.

The CPU 113 may process data received from the communication module in operation 4010.

The CPU 113 may transmit the processed data to the communication module 123 in operation 4020. The communication module 123 having received data may be any of the Bluetooth module 123a, the Wi-Fi module 123b, the ZigBee module 123c, and the Z-wave module 123d. In addition, the communication module 123 to be used for data transmission is not always the module that received the data from the external electronic device 500. For example, the Bluetooth module 123a may receive the data, and once the data is processed, the processed data may be transmitted through the Wi-Fi module 123b.

The CPU 113 may control the communication module 123 that received the data to transmit the received data to the external electronic device in operation 4030. The external electronic device 500 that the processed data is transmitted to may not necessarily be the same external electronic device 500 that originally transmitted raw data to be processed, and may be changed according to control of the CPU 113.

If the communication module 123 transmits data to the external electronic device 500, the CPU 113 may switch the communication module 123 from the operation mode to the sleep mode in operation 4040.

After the CPU 113 switches the communication module 123 to the sleep mode, the CPU 113 is switched from the operation mode to the sleep mode in operation 4050. Alternatively, the CPU 113 may be switched first and then the communication module 123 may be switched to the sleep mode. The CPU 113 and the communication module 123 may be switched to the sleep mode simultaneously. If the CPU 113 is switched from the operation mode to the sleep mode, the CPU 113 may automatically block or cut off power supply according to a program stored in a memory.

Through the above-mentioned operations, the constituent modules (e.g., the communication module 123 for data transmission/reception (Tx/Rx) and the CPU 113 for data processing) of the display apparatus 100 may be sequentially switched from the sleep mode to the operation mode, may then be switched from the operation mode to the sleep mode, resulting in minimum power consumption of the display apparatus 100.

FIGS. 10 to 12 are flowcharts illustrating methods for controlling the display apparatus 100 including a USB hub for interconnection between the communication module 123 and the CPU 113.

In FIG. 10, the controller having received the interrupt signal from the communication module 123 may sequentially switch the communication module 123, the USB hub 140, and the CPU 113.

If predefined event occurs, the electronic device 500 having detected the event may transmit the detected data to the display apparatus 100. The communication module 123 may receive data related to an event generated from the external electronic device 500, and the firmware of the communication module 123 may determine the presence or absence of validity in data. If the data is valid, the communication module 123 may transmit the interrupt signal to the controller 130.

The controller 130 may receive the interrupt signal from the communication module 123 in operation 5010.

The controller 130 may determine whether the interrupt signal received from the communication module 123 is identical to the signal stored in the controller 130 in operation 5020. If it is determined that the signal received from the communication module 123 is not identical to the stored signal, the controller 130 may not switch the communication module 123, the USB hub 140, the CPU 113, etc. of the display apparatus 100 from the sleep mode to the operation mode, and may stop the communication module 123, the USB hub 140, the CPU 113, etc.

However, if the interrupt signal is identical to the stored signal, the controller 130 may switch the communication module 123 of the display apparatus 10 from the sleep mode to the operation mode in operation 5030.

After the communication module 123 switches from the sleep mode to the operation mode, the controller 130 may switch the USB hub 140 from the sleep mode to the operation mode in operation 5040.

After the USB hub 140 switches from the sleep mode to the operation mode, the controller 130 may switch the CPU 113 from the sleep mode to the operation mode in operation 5050. However, the communication module 123, the USB hub 140, and the CPU 113 may be switched to the operation mode in any order or simultaneously.

The controller 130 may switch the CPU 113 to the operation mode, and may then stop operation.

As described above, the controller 130 may sequentially switch the communication module 123, the USB hub 140, and the CPU 113 from the sleep mode to the operation mode. However, other constituent elements contained in the display apparatus 100 may also be switched from the sleep mode to the operation mode according to the program stored in the controller 130.

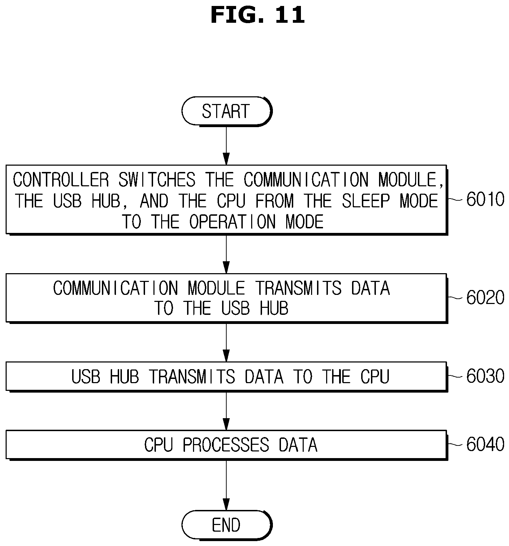

FIG. 11 is a flowchart illustrating a method for allowing the communication module 123, the USB hub 140, and the CPU 113, each of which is switched to the operation mode, to process data received from the external electronic device 500.

The controller 130 may switch the communication module 123, the USB hub 140, and the CPU 113 from the sleep mode to the operation mode in operation 6010.

As described above, the USB hub 140 may be in the operation mode but not in the reception mode, such that the USB hub 140 may receive or transmit data from or to another structure.

The communication module 123 may transmit reception (Rx) data to the USB hub 140 in operation 6020.

The USB hub 140 switched to the operation mode may receive data from the communication module 123, or may retransmit the received data to the CPU 113.

The USB hub 140 having received data may transmit the reception data to the CPU 113 in operation 6030.

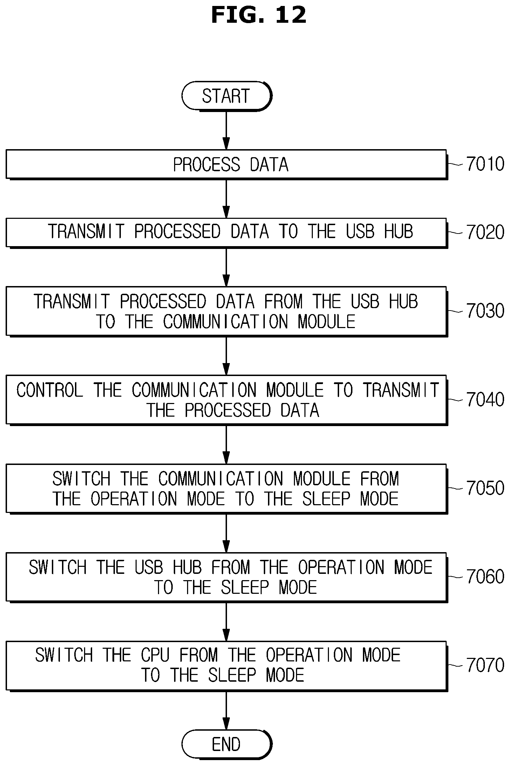

The CPU 113 switched to the operation mode may receive data from the USB hub 140, or may process data received from the communication module 123 in operation 6040. FIG. 12 is a flowchart illustrating a method for the CPU 113 switched to the operation mode to process reception (Rx) data as well as to communicate with the external electronic device 500 through the USB hub 140 and the communication module 123.

In FIG. 12, the CPU 113 may process data received from the USB hub in operation 7010.

The CPU 113 may transmit the processed data to the USB hub 140 in operation 7020. Because the USB hub 140 is in the operation mode, the USB hub 140 may receive the processed data from the CPU 113.

The USB hub 140 may transmit the processed data to a designated communication module 123 according to a control signal of the CPU 113 in operation 4030. The communication module 123 having received the data may be any one of the Bluetooth module 123a, the Wi-Fi module 123b, the ZigBee module 123c, and the Z-wave module 123d. In addition, the communication module 123 to be used for data transmission is not necessarily a module scheduled to receive the data from the external electronic device 500.

The CPU 113 may control the communication module 123 having received the data to transmit the data to the external electronic device in operation 7040.

If the communication module 123 transmits the data to the external electronic device 500, the CPU 113 may switch the communication module 123 from the operation mode to the sleep mode in operation 7050.

After the CPU 113 switches the communication module 123 to the sleep mode, the CPU 113 may switch the USB hub 140 from the operation mode to the sleep mode in operation 7060.

The CPU 113 may switch the communication module 123 and the USB hub 140 from the operation mode to the sleep mode, and may then be switched from the operation mode to the sleep mode in operation 7070. The communication module 123, the USB hub 140, and the CPU 113 may be switched from the operation mode to the sleep mode in any order or simultaneously.

In FIGS. 10 to 12, the communication module 123 for data Tx/Rx, the CPU 113 for processing data, and the USB hub 140 for connecting the CPU 113 to the communication module 123, which are contained in the display apparatus 100, may be sequentially switched from the sleep mode to the operation mode under the control of the controller 130, and may then be switched from the operation mode to the sleep mode under the control of the CPU 113, resulting in minimizing power consumption of the display apparatus 100.

FIG. 13 is a conceptual diagram illustrating an exemplary application of the display apparatus.

More specifically, FIG. 13 is a conceptual diagram illustrating the operation of the display apparatus having the IoT function through which the display apparatus can transmit and receive data to and from another external electronic device.

The user may allow the IoT system to interwork with a door lock system, a mobile phone, and a display apparatus.

Referring to FIG. 13, the display apparatus 100 according to another embodiment may include a door 400 equipped with a door sensor for sensing the opening or closing of the door, a router 200, and a smartphone 300 configured to perform Internet networking.

In addition, the CPU sub-system 110, the USB hub 140, the controller 130, and the communication module 123 of the display apparatus 100 are housed in the main body 101 of the display apparatus 100, and may not necessarily be displayed on the display panel 172 of the display 170.

First, the door 400 equipped with the door sensor for detecting the opening or closing of the door is opened. The door sensor may detect the opening of the door, and may transmit information indicating the occurrence of the door open event to the display apparatus 100 using the embedded communication means.

The user may have previously selected, for example, the communication module 123c for transmitting the signal of the door sensor. Therefore, if the door sensor transmits a signal, the ZigBee module 123c in the reception (Rx) mode may receive the signal.

The firmware of the ZigBee module 123c may determine whether the reception (Rx) signal corresponds to a known event (e.g., door open event, door close event, etc.). If the reception signal corresponds to a known event, the firmware of the ZigBee module 123c may transmit the interrupt signal to the controller 130.

The controller 130 may receive the interrupt signal, and may determine whether the reception signal is valid. If the interrupt signal is identical to the stored signal that corresponds to the door open event, the controller 130 may reduce power consumption of the display apparatus 100.

In more detail, the controller 130 may switch the communication module 123 from the sleep mode to the operation mode. The ZigBee module 123c switched to the operation mode may transmit the data to the USB hub 130. If the communication module 123 is switched from the sleep mode to the operation mode, the controller 130 may switch the USB hub 140 from the sleep mode to the operation mode. If the USB hub 140 is switched from the sleep mode to the operation mode, the controller 130 may switch the CPU 113 from the sleep mode to the operation mode.

The ZigBee module 123c may transmit the data to the CPU 113 of the CPU sub-system 110 through the USB hub 140. The CPU 113 may process the received data. After the CPU 113 processes the data, the CPU 113 may transmit the processed data to the Wi-Fi module 123b through the USB hub 140.

The Wi-Fi module 123b may operate under the control of the CPU 113. The Wi-Fi module 123b illustrated in FIG. 13 may transmit the data to a server (e.g., a cloud server) through the router 200, and may transmit to the smartphone a notification message indicating that the door is opened.

Once the Wi-Fi module 123b finishes transmitting the data, the CPU 113 may switch the communication module 123 from the operation mode back to the sleep mode. Thereafter, the CPU 113 may switch the USB hub 140 from the operation mode to the sleep mode.

After the communication module 123 is switched from the operation mode to the sleep mode, the CPU 113 may be automatically switched from the operation mode to the sleep mode according to the stored program.

In addition, the term "module" used in the aforementioned embodiments may refer to a software or hardware component such as a Field Programmable Gate Array (FPGA) or an application-specific integrated circuit (ASIC), and perform any of the functions discussed above. However, the term "module" is not limited to the hardware or software component. The term "module" may be configured in an addressable storage medium or configured to execute one or more processors.

As is apparent from the above description, the display apparatus and the method for controlling the same according to the embodiments can sequentially apply a power source to a network processor of the display apparatus according to flow of data processes, resulting in maintenance of a low power state.

Embodiments within the scope of the present disclosure may also include tangible and/or non-transitory computer-readable storage devices and mediums for carrying or having computer-executable instructions or data structures stored thereon. Such tangible computer-readable storage devices or mediums can be any available media that can be accessed by a general-purpose or special-purpose computer, including the functional design of any special purpose processor as described above. By way of example, and not limitation, such non-transitory computer-readable storage devices or mediums can include RAM, ROM, EEPROM, CD-ROM, drives or other optical disc storage, magnetic disk storage or other magnetic storage devices, semiconductor-based storage devices, or any other device or medium which can be used to carry or store desired program code means in the form of computer-executable instructions, data structures, or processor chip design.

Although a few embodiments of the present disclosure have been shown and described, it would be appreciated by those skilled in the art that changes may be made in these embodiments without departing from the principles of the inventive concept, the scope of which is defined in the claims.

The word "exemplary" is used herein to mean "serving as an example or illustration." Any aspect or design described herein as "exemplary" is not necessarily to be construed as preferred or advantageous over other aspects or designs.

## Claims

1. A display apparatus (100) comprising:
a controller (130);
a communication module (123) configured to:
receive data from an external electronic device while the communication module is in a sleep mode in which reception of the data from the external electronic device is permitted and transmission of the data to the external electronic device is not permitted, and
based on the received data containing valid data, transmit an interrupt signal to the controller (130); and
a Central Processing Unit, CPU, sub-system (110) comprising a CPU (113) configured to be in a sleep mode of the CPU (113)
wherein the controller (130) is configured to:
based on the communication module (123) transmitting the interrupt signal, switch the communication module (123) from the sleep mode to an operation mode, in which the reception and the transmission of the data are permitted,
based on the communication module (123) switched to the operation mode, switch the CPU (113) from the sleep mode to the operation mode, and
control the CPU (113); wherein the CPU is configured to receive and process the data transmitted from the communication module (123), and transmit the processed data to the communication module (123),
wherein, based on the processed data transmitted by the communication module (123) to the external electronic device, the CPU (113) is configured to control the communication module (123) to switch from the operation mode to the sleep mode, and
wherein, based on the communication module (123) switched to the sleep mode, the CPU (113) is switched from the operation mode to the sleep mode.

2. The display apparatus according to claim 1, wherein the communication module comprises at least one from among a Bluetooth module, a Wi-Fi module, a ZigBee module, and a Z-wave module.

3. The display apparatus according to any one of the preceding claims, wherein the CPU sub-system (110) comprises at least one from among a flash memory and a double data rate DDR memory.

4. The display apparatus according to any one of the preceding claims, further comprising:
a universal serial bus, USB, hub (140) configured to connect the communication module (123) to the CPU (113).

5. The display apparatus according to claim 4, wherein the controller (130) is further configured to sequentially switch the communication module (123), the USB hub (140), and the CPU (113) from the sleep mode to the operation mode.

6. A method for controlling a display apparatus comprising:
receiving, by a communication module (123) of the display apparatus, data from an external electronic device while the communication module (123) is in a sleep mode in which reception of the data from the external electronic device is permitted and transmission of the data to the external electronic device is not permitted;
based on the received data containing valid data, transmitting an interrupt signal from the communication module to a controller (130) of the display apparatus;
switching, by the controller (130), the communication module (123) from the sleep mode to an operation mode to enable the communication module (123) to transmit the data;
based on the communication module (123) switched from the sleep mode to the operation mode, switching, by the controller (130), a central processing unit, CPU, (113) of a CPU sub-system (110) of the display apparatus from the sleep mode to the operation mode to enable the CPU (113) to receive and process the data transmitted from the communication module (123);
processing, by the CPU (113) the data transmitted from the communication module (123);
transmitting, by the CPU (113), the processed data to the communication module (123);
based on the processed data transmitted by the communication module (123) to the external electronic device, controlling, by the CPU (113), the communication module (123) to switch from the operation mode to the sleep mode; and
based on the communication module (123) switched to the sleep mode, switching the CPU (113) from the operation mode to the sleep mode.

7. The method according to claim 6, further comprising:
wherein the display apparatus comprises a universal serial bus, USB, hub (140) configured to connect the communication module (123) to the CPU (113),
and wherein the controller (130) switches the USB hub (140) from the sleep mode to the operation mode after the communication module (123) is switched from the sleep mode to the operation mode and before the CPU (113) is switched from the sleep mode to the operation mode.

8. The method according to claim 7, further comprising:
if the CPU (113) is switched from the sleep mode to the operation mode, transmitting, by the communication module (123), the received data to the CPU (113) through the USB hub (140),
transmitting, by the CPU (113), the processed data to the communication module (123) through the USB hub (140),
transmitting, by the communication module (123), the processed data to the external electronic device; and
switching, by the CPU (113), the USB hub (140) and the communication module (123) from the operation mode to the sleep mode, and
after switching the USB hub (140) and the communication module (123) from the operation mode to the sleep mode by the CPU (113), switching the CPU (113) from the operation mode to the sleep mode.

## Patentansprüche

1. Anzeigevorrichtung (100), die Folgendes aufweist:
eine Steuereinheit (130);
ein Kommunikationsmodul (123), das konfiguriert ist zum:
Empfangen von Daten von einer externen elektronischen Vorrichtung, während das Kommunikationsmodul in einem Schlafmodus ist, in dem der Empfang der Daten von der externen elektronischen Vorrichtung zugelassen ist und die Übertragung der Daten an die externe elektronische Vorrichtung nicht zugelassen ist, und
Übertragen eines Unterbrechungssignals an die Steuereinheit (130) auf Basis dessen, dass die empfangenen Daten gültige Daten enthalten; und
ein Zentraleinheit- (Central Processing Unit, CPU) -Untersystem (110), das eine CPU (113) aufweist, die konfiguriert ist, um in einem Schlafmodus der CPU (113) zu sein,
wobei die Steuereinheit (130) konfiguriert ist zum:
Umschalten, auf Basis des Übertragens des Unterbrechungssignals durch das Kommunikationsmoduls (123), des Kommunikationsmoduls (123) vom Schlafmodus auf einen Betriebsmodus, in dem der Empfang und die Übertragung der Daten zugelassen sind,
Umschalten, auf Basis des auf den Betriebsmodus umgeschalteten Kommunikationsmoduls (123), der CPU (113) vom Schlafmodus auf den Betriebsmodus, und
Steuern der CPU (113); wobei die CPU zum Empfangen und Verarbeiten der vom Kommunikationsmodul (123) übertragenen Daten und zum Übertragen der verarbeiteten Daten an das Kommunikationsmodul (123) konfiguriert ist,
wobei die CPU (113), auf Basis der durch das Kommunikationsmodul (123) an die externe elektronische Vorrichtung übertragenen verarbeiteten Daten, zum Steuern des Kommunikationsmoduls (123) zum Umschalten vom Betriebsmodus auf den Schlafmodus konfiguriert ist und
wobei die CPU (113), auf Basis des auf den Schlafmodus umgeschalteten Kommunikationsmoduls (123), vom Betriebsmodus auf den Schlafmodus umgeschaltet wird.

2. Anzeigevorrichtung nach Anspruch 1, wobei das Kommunikationsmodul wenigstens eines unter einem Bluetooth-Modul, einem Wi-Fi-Modul, einem ZigBee-Modul und einem Z-Wave-Modul aufweist.

3. Anzeigevorrichtung nach einem der vorhergehenden Ansprüche, wobei das CPU-Untersystem (110) wenigstens eines unter einem Flash-Speicher und einem Speicher mit doppelter Datenübertragungsrate (DDR) aufweist.

4. Anzeigevorrichtung nach einem der vorhergehenden Ansprüche, die ferner Folgendes aufweist:
einen Universal Serial Bus- (USB) -Hub (140), der zum Verbinden des Kommunikationsmoduls (123) mit der CPU (113) konfiguriert ist.

5. Anzeigevorrichtung nach Anspruch 4, wobei die Steuereinheit (130) ferner zum sequentiellen Umschalten des Kommunikationsmoduls (123), des USB-Hubs (140) und der CPU (113) vom Schlafmodus auf den Betriebsmodus konfiguriert ist.

6. Verfahren zum Steuern einer Anzeigevorrichtung, das Folgendes aufweist:
durch ein Kommunikationsmodul (123) der Anzeigevorrichtung Empfangen von Daten von einer externen elektronischen Vorrichtung, während das Kommunikationsmodul (123) in einem Schlafmodus ist, in dem der Empfang der Daten von der externen elektronischen Vorrichtung zugelassen ist und die Übertragung der Daten an die externe elektronische Vorrichtung nicht zugelassen ist;
Übertragen, auf Basis dessen, dass die empfangenen Daten gültige Daten enthalten, eines Unterbrechungssignals vom Kommunikationsmodul zu einer Steuereinheit (130) der Anzeigevorrichtung;
durch die Steuereinheit (130) Umschalten des Kommunikationsmoduls (123) vom Schlafmodus auf einen Betriebsmodus zum Freigeben des Kommunikationsmoduls (123) zum Übertragen der Daten;
durch die Steuereinheit (130), auf Basis des vom Schlafmodus auf den Betriebsmodus umgeschalteten Kommunikationsmoduls (123), Umschalten einer Zentraleinheit (Central Processing Unit, CPU) (113) eines CPU-Untersystems (110) der Anzeigevorrichtung vom Schlafmodus auf den Betriebsmodus, um die CPU (113) zum Empfangen und Verarbeiten der vom Kommunikationsmodul (123) übertragenen Daten freizugeben;
durch die CPU (113) Verarbeiten der vom Kommunikationsmodul (123) übertragenen Daten;
durch die CPU (113) Übertragen der verarbeiteten Daten an das Kommunikationsmodul (123);
durch die CPU (113) Steuern, auf Basis der durch das Kommunikationsmoduls (123) an die externe elektronische Vorrichtung übertragenen verarbeiteten Daten, des Kommunikationsmoduls (123) zum Umschalten vom Betriebsmodus auf den Schlafmodus; und
Umschalten, auf Basis des auf den Schlafmodus umgeschalteten Kommunikationsmoduls (123), der CPU (113) vom Betriebsmodus auf den Schlafmodus.

7. Verfahren nach Anspruch 6, das ferner Folgendes aufweist:
wobei die Anzeigevorrichtung einen Universal Serial Bus- (USB) -Hub (140) aufweist, der zum Verbinden des Kommunikationsmoduls (123) mit der CPU (113) konfiguriert ist,
und wobei die Steuereinheit (130) den USB-Hub (140) vom Schlafmodus auf den Betriebsmodus umschaltet, nachdem das Kommunikationsmodul (123) vom Schlafmodus auf den Betriebsmodus umgeschaltet worden ist und bevor die CPU (113) vom Schlafmodus auf den Betriebsmodus umgeschaltet worden ist.

8. Verfahren nach Anspruch 7, das ferner Folgendes aufweist:
wenn die CPU (113) vom Schlafmodus auf den Betriebsmodus umgeschaltet wird, Übertragen der empfangenen Daten durch das Kommunikationsmodul (123) an die CPU (113) durch den USB-Hub (140),
durch die CPU (113) Übertragen der verarbeiteten Daten an das Kommunikationsmodul (123) durch den USB-Hub (140),
durch das Kommunikationsmodul (123) Übertragen der verarbeiteten Daten an die externe elektronische Vorrichtung; und
durch die CPU (113) Umschalten des USB-Hubs (140) und des Kommunikationsmoduls (123) vom Betriebsmodus auf den Schlafmodus und
nach dem Umschalten des USB-Hubs (140) und des Kommunikationsmoduls (123) vom Betriebsmodus auf den Schlafmodus durch die CPU (113), Umschalten der CPU (113) vom Betriebsmodus auf den Schlafmodus.

## Revendications

1. Appareil d'affichage (100) comprenant :
un contrôleur (130) ;
un module de communication (123) configuré pour :
recevoir des données venant d'un dispositif électronique extérieur tandis que le module de communication est dans un mode veille dans lequel la réception des données venant du dispositif électronique extérieur est permise et la transmission des données vers le dispositif électronique extérieur n'est pas permise, et
basé sur le fait que les données reçues contiennent des données valides, transmettre un signal d'interruption au contrôleur (130) ; et
un sous-système unité centrale, UC, (110) comprenant une UC (113) configurée pour être dans un mode veille de l'UC (113),
dans lequel le contrôleur (130) est configuré pour :
basé sur le fait que le module de communication (123) transmet le signal d'interruption, faire passer le module de communication (123) du mode veille à un mode de fonctionnement dans lequel la réception et la transmission des données sont permises,
basé sur le fait que le module de communication (123) est passé en mode de fonctionnement, faire passer l'UC (113) du mode veille au mode de fonctionnement, et
commander l'UC (113), laquelle UC est configurée pour recevoir et traiter les données transmises depuis le module de communication (123) et pour transmettre les données traitées au module de communication (123),
dans lequel, basé sur le fait que les données traitées sont transmises par le module de communication (123) au dispositif électronique extérieur, l'UC (113) est configurée pour commander au module de communication (123) de passer du mode de fonctionnement au mode veille, et
dans lequel, basé sur le fait que le module de communication (123) est passé en mode veille, l'UC (113) passe du mode de fonctionnement au mode veille.

2. Appareil d'affichage selon la revendication 1, dans lequel le module de communication comprend l'un au moins parmi un module Bluetooth, un module Wi-Fi, un module ZigBee et un module Z-wave.

3. Appareil d'affichage selon l'une quelconque des revendications précédentes, dans lequel le sous-système UC (110) comprend l'une au moins parmi une mémoire flash et une mémoire à débit de données double, DDR.

4. Appareil d'affichage selon l'une quelconque des revendications précédentes, comprenant en outre :
un concentrateur de bus série universel, USB, (140) configuré pour connecter le module de communication (123) à l'UC (113).

5. Appareil d'affichage selon la revendication 4, dans lequel le contrôleur (130) est en outre configuré pour faire passer séquentiellement le module de communication (123), le concentrateur USB (140) et l'UC (113) du mode veille au mode de fonctionnement.

6. Procédé de commande d'un appareil d'affichage, comprenant :
la réception, par un module de communication (123) de l'appareil d'affichage, de données venant d'un dispositif électronique extérieur tandis que le module de communication (123) est dans un mode veille dans lequel la réception des données venant du dispositif électronique extérieur est permise et la transmission des données vers le dispositif électronique extérieur n'est pas permise ;
basé sur le fait que les données reçues contiennent des données valides, la transmission d'un signal d'interruption venant du module de communication à un contrôleur (130) de l'appareil d'affichage ;
le passage, par le contrôleur (130), du module de communication (123) du mode veille à un mode de fonctionnement pour permettre au module de communication (123) de transmettre les données ;
basé sur le fait que le module de communication (123) est passé du mode veille au mode de fonctionnement, le passage, par le contrôleur (130), d'une unité centrale, UC, (113) d'un sous-système UC (110) de l'appareil d'affichage du mode veille au mode de fonctionnement pour permettre à l'UC (113) de recevoir et de traiter les données transmises depuis le module de communication (123) ;
le traitement, par l'UC (113), des données transmises depuis le module de communication (123) ;
la transmission, par l'UC (113), des données traitées au module de communication (123) ;
basé sur le fait que les données traitées ont été transmises par le module de communication (123) au dispositif électronique extérieur, la commande, par l'UC (113), du module de communication (123) pour passer du mode de fonctionnement au mode veille ; et
basé sur le fait que le module de communication (123) est passé en mode veille, le passage de l'UC (113) du mode de fonctionnement au mode veille.

7. Procédé selon la revendication 6, comprenant en outre :
dans lequel l'appareil d'affichage comprend un concentrateur de bus série universel, USB, (140) configuré pour connecter le module de communication (123) à l'UC (113) ,
et dans lequel le contrôleur (130) fait passer le concentrateur USB (140) du mode veille au mode de fonctionnement après le passage du module de communication (123) du mode veille au mode de fonctionnement et avant le passage de l'UC (113) du mode veille au mode de fonctionnement.

8. Procédé selon la revendication 7, comprenant en outre :
si l'UC (113) est passée du mode veille au mode de fonctionnement, la transmission, par le module de communication (123), des données reçues à l'UC (113) par le biais du concentrateur USB (140),
la transmission, par l'UC (113), des données traitées au module de communication (123) par le biais du concentrateur USB (140),
la transmission, par le module de communication (123), des données traitées au dispositif électronique extérieur ; et
le passage, par l'UC (113), du concentrateur USB (140) et du module de communication (123) du mode de fonctionnement au mode veille, et
après le passage du concentrateur USB (140) et du module de communication (123) du mode de fonctionnement au mode veille par l'UC (113), le passage de l'UC (113) du mode de fonctionnement au mode veille.
